# DEMANDE DE BREVET EUROPEEN

(11) **EP 4 442 401 A1**
(43) Date de publication de la demande: **09.10.2024**
(21) Numéro de dépôt: 23167070.4
(22) Date de dépôt: 06.04.2023
(51) Int. Cl.: B23Q 1/62

(54) **MACHINE-OUTIL A COMMANDE NUMERIQUE POUR L'USINAGE DE PIECES MICROMECANIQUES A PARTIR D'UNE PIECE BRUTE SOUS FORME D'UNE BARRE OU D'UNE BANDE**

(71) Demandeur: ETA SA Manufacture Horlogère Suisse, 2540 Grenchen (CH)
(72) Inventeur: PHAM, Patric, 3427 Utzenstorf (CH); DONZÉ, Christophe, 2542 Pieterlen (CH)
(74) Mandataire: ICB SA

(57) **Abrégé**

L'invention concerne une machine-outil (10) à commande numérique pour l'usinage de pièces micromécaniques à partir d'une pièce (100) brute sous forme d'une barre ou d'une bande, comprenant un bâti (12), une unité porte-pièce (11) destinée à maintenir la pièce (100) en position et une unité porte-outil (13) destinée à porter un outil de coupe (130), l'unité porte-pièce (11) étant reliée cinématiquement au bâti (12) de sorte à présenter, par rapport au bâti (12), uniquement un degré de liberté en rotation et un degré de liberté en translation selon une direction Z, dans un repère XYZ, et l'unité porte-outil (13) étant reliée cinématiquement au bâti (12) de sorte à présenter, par rapport au bâti (12), uniquement un degré de liberté en translation selon une direction X, et un degré de liberté en rotation et en translation selon une direction Y.

## Description

### Domaine technique de l'invention

L'invention relève du domaine des machines-outils à commande numériques, et concerne en particulier une machine-outil à commande numérique pour l'usinage de pièces micromécaniques à partir d'une pièce brute sous forme d'une barre ou d'une bande.

Le terme « barre » désigne, dans le présent texte, tout fil, profilé ou tube, plein ou creux, quel que soit la forme de sa section transversale.

### Arrière-plan technologique

Dans le domaine de la micromécanique, la réduction des dimensions des machines-outils à commande numérique, notamment la réduction de la taille des machines-outils par rapport au volume d'usinage, offre de nombreux avantages parmi lesquels l'augmentation des vitesses de coupe et de déplacement des outils de coupe du fait de la diminution de l'inertie des masses en mouvement, la réduction de la surface au sol utile pour le stockage desdites machines-outils et la réduction de la consommation énergétique de telles machines-outils.

Toutefois, la réduction des dimensions des machines-outils peut s'accompagner d'une perte de rigidité statique de la machine-outil, c'est-à-dire que les pièces constituant la machine-outil sont plus sujettes à la déformation, ce qui est préjudiciable pour un usinage de grande précision, tel que requis par les applications microtechniques telles que l'horlogerie.

La notion de « rigidité de machine-outil », dans le domaine de la mécanique, caractérise la stabilité dimensionnelle des pièces constituant la machine-outil sous l'effet d'un gradient thermique ou d'une contrainte mécanique, en particulier les pièces formant le chemin cinématique entre la pièce à usiner et l'outil de coupe passant par les pièces constituant la machine-outil, c'est-à-dire la boucle des efforts.

### Résumé de l'invention

L'invention résout les inconvénients précités et concerne à cet effet une machine-outil à commande numérique pour l'usinage de pièces micromécaniques à partir d'une pièce brute sous forme d'une barre ou d'une bande, comprenant un bâti, une unité porte-pièce destinée à maintenir la pièce en position et une unité porte-outil destinée à porter un outil de coupe.

Dans le présent texte, les termes « outil de coupe » désignent tout outil servant à générer un enlèvement de matière d'une pièce, qu'il soit fixe, tel qu'un outil de tournage, ou rotatif, tel qu'un outil de fraisage.

L'unité porte-pièce est reliée cinématiquement au bâti de sorte à uniquement présenter, par rapport au bâti, un degré de liberté en rotation et en translation selon une direction Z, dans un repère XYZ. L'unité porte-outil est reliée cinématiquement au bâti de sorte à uniquement présenter, par rapport au bâti, un degré de liberté en translation selon une direction X, et un degré de liberté en rotation et en translation selon une direction Y.

Dans le présent texte, le terme « direction » désigne un axe s'étendant dans une direction donnée. Par exemple, la direction X désigne l'axe X ou un axe parallèle à l'axe X.

La présente invention permet avantageusement d'optimiser le rapport entre la taille de la machine-outil et celle de la pièce brute, et plus particulièrement, permet de minimiser les dimensions de la machine-outil et/ou de maximiser les dimensions de la pièce brute.

A titre d'exemple, la machine-outil est conçue de sorte que le volume de la machine-outil est sensiblement cinq fois supérieur à celui de la zone d'usinage et que le volume de la pièce brute avant usinage peut être au moins cinq fois supérieur à celui de la zone d'usinage. Il en résulte que le rapport entre le volume de la machine-outil et celui de la pièce brute peut être égale à un.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'unité porte-pièce comporte un chariot porte-pièce relié au bâti par au moins une coulisse fixée directement sur le bâti, ledit chariot porte-pièce comportant un module porte-pièce adapté à être piloté pour occuper un état de serrage dans lequel il maintien en position la pièce, ou pour occuper un état de libération dans lequel il autorise le déplacement de la pièce.

Dans des modes particuliers de réalisation, le chariot porte-pièce présente une ouverture traversante s'étendant selon la direction Z et débouchant à l'une de ses extrémités au niveau du module porte-pièce, ladite ouverture étant destinée à recevoir la pièce afin d'alimenter une zone d'usinage de la machine-outil.

Dans des modes particuliers de réalisation, l'unité porte-outil comporte un premier chariot relié au bâti par le biais d'au moins une coulisse fixée directement sur le bâti, et s'étendant selon la direction X. L'unité porte-outil comporte un second chariot relié au premier chariot et comprenant un porte-outil mobile en rotation et en translation selon la direction Y.

Dans des modes particuliers de réalisation, le second chariot est monté sur au moins une coulisse fixée sur le premier chariot s'étendant selon la direction Y, le porte-outil étant mobile en rotation par rapport au second chariot.

Dans des modes particuliers de réalisation, la machine-outil comporte une unité additionnelle reliée cinématiquement au bâti de sorte à présenter uniquement un degré de liberté en rotation et en translation selon la direction Z. L'unité additionnelle est agencée de façon que l'outil de coupe soit interposé entre l'unité porte-pièce et ladite unité additionnelle, cette dernière comportant un chariot additionnel agencé en vis-à-vis de l'unité porte-pièce et recevant un module contre porte-pièce destiné à immobiliser ou libérer une pièce, ou recevant un porte-outil secondaire destiné à porter un outil de coupe.

Dans des modes particuliers de réalisation, le chariot additionnel présente une ouverture traversante s'étendant selon la direction Z et débouchant à l'une de ses extrémités au niveau du module contre porte-pièce, l'ouverture traversante étant destinée à recevoir la pièce afin de l'extraire d'une zone d'usinage de la machine-outil.

Dans des modes particuliers de réalisation, le chariot additionnel est monté sur au moins une coulisse fixée sur le bâti, les coulisses auxquelles sont reliés le chariot porte-pièce et le chariot additionnel étant constituées par les mêmes coulisses.

Dans des modes particuliers de réalisation, le module porte-pièce et le module contre porte-pièce peuvent comporter l'un et l'autre un dispositif de posage, destinés à guider la pièce lorsqu'elle est entraînée en déplacement, ou à maintenir la pièce en position.

Dans des modes particuliers de réalisation, la machine-outil comprend une seconde unité porte-outil analogue à l'unité porte-outil, agencée de façon symétrique à cette dernière par rapport à un plan de symétrie YZ, de sorte que lesdites unités porte-outil se trouvent respectivement de part et d'autre de l'unité porte-pièce et de l'unité additionnelle.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'une variante d'une machine-outil selon un exemple préféré de réalisation de l'invention, dans laquelle la pièce brute à usiner est sous la forme d'une barre ;
- la figure 2 représente une vue en perspective d'une autre variante de la machine-outil de la figure 1, dans laquelle la pièce brute à usiner est sous la forme d'une bande ;
- la figure 3 représente une vue de face de la machine-outil de la figure 1 ;
- la figure 4 représente une vue en coupe selon l'axe A-A d'un détail de la machine-outil de la figure 3.

On note que les figures ne sont pas nécessairement dessinées à l'échelle pour des raisons de clarté.

### Description détaillée de l'invention

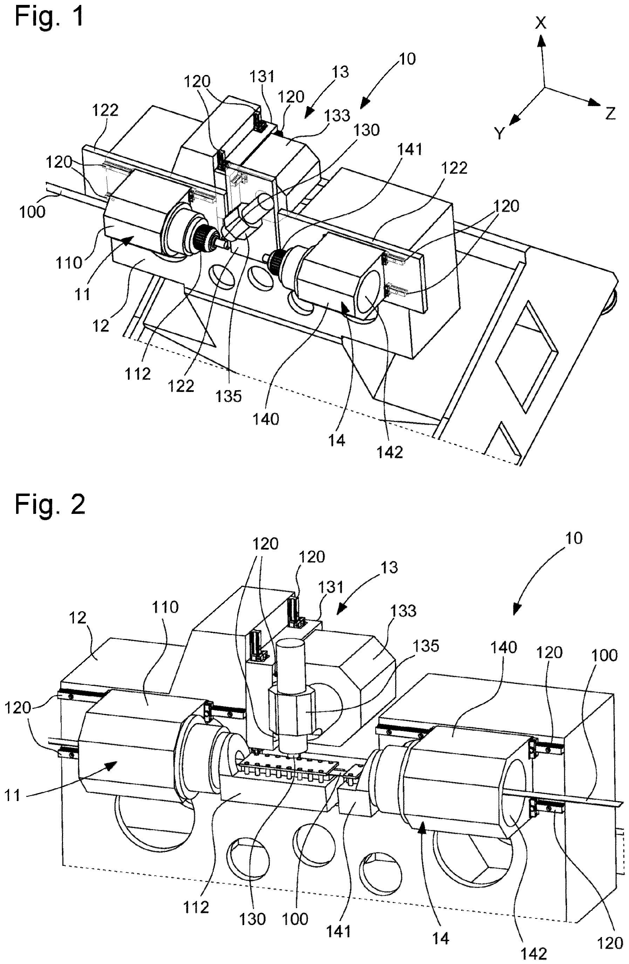

La machine-outil 10 à commande numérique selon l'invention est adaptée pour l'usinage de pièces micromécaniques à partir d'une pièce brute à usiner sous forme d'une barre, telle que représentée sur la figure 1, ou sous forme d'une bande, comme visible sur la figure 2. De manière connue par l'homme du métier, la machine-outil 10 comporte une unité de contrôle et de commande, tel qu'un microcontrôleur, destinée à recevoir des consignes sous la forme d'un programme informatique et à piloter les organes de la machine-outil 10 suivant ces consignes. Le pilotage des différents organes de la machine-outil 10 étant à la portée de l'homme du métier et n'étant pas en tant que tel l'objet de la présente invention, ces aspects ne sont pas abordés plus en détail dans le présent texte.

Dans une application préférée de l'invention, la machine-outil 10 est adaptée à obtenir des pièces propres au domaine horloger, en particulier des poussoirs, couronnes, vis, arbres, pignons, etc. lorsque la pièce brute est sous la forme d'une barre, et des ponts, platines, bascules, carrures, balanciers, maillons de bracelets, etc. lorsque le pièce brute est sous la forme d'une bande. La pièce brute est déplacée de sorte à alimenter une zone d'usinage de la machine-outil 10 afin d'usiner des pièces dans ladite pièce brute, les unes à la suite des autres. Pour simplifier la lecture du présent texte, une pièce brute et une pièce en cours d'usinage ou dont l'usinage est achevé sont désignées par le même terme « pièce » 100.

Telle que visible sur les figures, la machine-outil 10 comporte une unité porte-pièce 11 destinée notamment à maintenir la pièce 100 en position lors de l'usinage. L'unité porte-pièce 11 est reliée cinématiquement à un bâti 12 de sorte à uniquement présenter un degré de liberté en rotation et un degré de liberté en translation selon une direction Z dans un repère orthonormé XYZ. Comme illustrée sur les figures 1 à 3, l'unité porte-pièce 11 est configurée pour maintenir la pièce 100 dans une position telle que celle-ci s'étende longitudinalement selon la direction Z. Cette caractéristique permet de limiter l'inertie des éléments en mouvement lors du déplacement de l'unité porte-pièce 11.

Le degré de liberté en rotation de l'unité porte-pièce 11 permet avantageusement de pouvoir la piloter de sorte à réaliser des opérations de tournage sur la pièce 100, ou de sorte à réaliser des opérations de fraisage dans différentes positions angulaires de la pièce 100. A titre d'exemple, l'unité porte-pièce 11 peut être configurée pour entraîner la pièce 100 jusqu'à plus de 8000 tours/minute, par exemple, jusqu'à 20000 tours/minute, lors d'opérations de tournage. Il va de soi que les opérations de tournage ne conviennent que pour une pièce 100 sous forme de barre.

Le bâti 12 est formé, dans la présente invention, par les éléments structurels rigides de la machine-outil 10. Grâce aux caractéristiques de l'invention, le bâti 12 peut être relativement compact, comme le montrent les figures.

La machine-outil 10 comporte également une unité porte-outil 13 destinée à porter un outil de coupe 130 et reliée cinématiquement au bâti 12 de sorte à uniquement présenter un degré de liberté en translation selon la direction X, un degré de liberté en rotation et en translation selon la direction Y.

Ainsi, la machine-outil 10 comporte cinq degrés de mobilité, dont trois sont propres à l'unité porte-outil 13 et deux sont propres à la pièce 100. La majorité des déplacements est donc effectuée par l'ensemble présentant la masse la plus faible, c'est-à-dire par l'unité porte-outil 13. Par ailleurs, d'un point de vue cinématique, il a été recherché de limiter à deux le nombre de degré de liberté en translation de l'unité porte-outil 13 afin de limiter la masse totale des éléments en mouvement et ainsi minimiser les contraintes liées à l'inertie afin de pouvoir employer des éléments de liaison relativement compacts, comme cela est décrit plus en détail dans la suite du texte.

Globalement, ces dispositions permettent également de minimiser le nombre d'éléments de liaison interposés respectivement entre les unités porte-outil 13 et porte-pièce 11 et le bâti 12, ce qui présente l'avantage de permettre une construction rigide de la machine-outil 10 tout en minimisant son volume et sa masse.

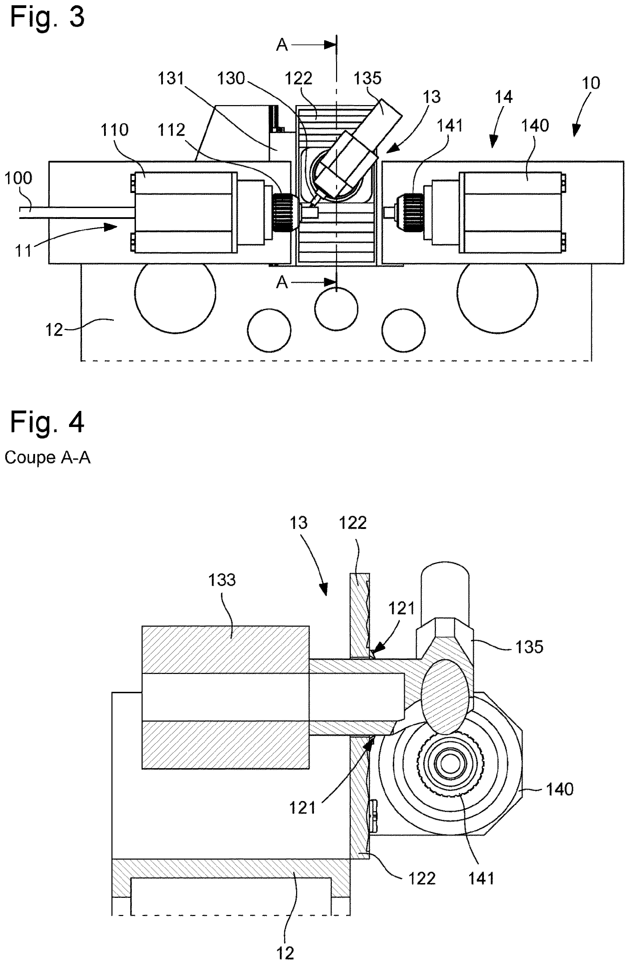

En particulier, l'unité porte-pièce 11 comporte un chariot porte-pièce 110 monté sur au moins une coulisse 120 fixée directement sur le bâti 12. Le chariot porte-pièce 110 comporte un module porte-pièce 112, par exemple formé par un mandrin comme le montre les figures 1 et 3, ou par un dispositif de posage, comme le montre la figure 2. De façon connue, le module porte-pièce 112 est adapté à être piloté pour occuper un état de serrage dans lequel il maintien en position la pièce 100, ou pour occuper un état de libération dans lequel il autorise le déplacement de la pièce 100. Le chariot porte-pièce 110 présente une ouverture traversante s'étendant selon la direction Z, à travers laquelle la pièce 100 est destinée à être guidée afin d'alimenter la zone d'usinage de la machine-outil 10. On comprend ici que l'ouverture débouche à l'une de ses extrémités au niveau du module porte-pièce 112.

En outre, l'unité porte-outil 13 comporte un premier chariot 131 monté sur au moins une coulisse 120 fixée directement sur le bâti 12 et s'étendant selon la direction X. L'unité porte-outil 13 comporte également un second chariot 133 monté sur au moins une coulisse 120 fixée sur le premier chariot 131 et s'étendant selon la direction Y. Le second chariot 133 comporte un porte-outil 135 telle que visible sur les figures 1 à 4, mobile en rotation autour de la direction Y, tel qu'une broche porte-outil.

Comme le montrent les figures 1 et 2, la direction X est orientée verticalement, c'est-à-dire selon la direction de la pesanteur. Le premier chariot 131 est donc susceptible d'être soumis à des efforts plus importants que le second chariot 133 dans la mesure où ces efforts sont liés à la masse des éléments que les premier et second chariots 131 et 133 supportent respectivement. Aussi, le premier chariot 131 est configuré pour réaliser une course plus importante que le second chariot 133, notamment afin de dégager l'outil de coupe 130 de la zone d'usinage.

Le premier chariot 131 étant directement relié au bâti 12, les efforts supplémentaires auxquels il est soumis par rapport au second chariot 133, ainsi que sa course plus importante, ne risquent pas d'affecter la rigidité de la machine-outil 10.

On comprend ici que la disposition des degrés de liberté du chariot porte-pièce 110 et des premier et second chariots 131 et 133 de l'unité porte-outil 13 est particulièrement avantageuse puisqu'elle permet, d'une part, de minimiser les masses des éléments entraînés en mouvement et ainsi, de minimiser les contraintes auxquelles est soumise la machine-outil 10, et d'autre part, de transmettre au bâti 12 ces contraintes le plus directement possible. Grâce à ces caractéristiques, la machine-outil 10, et en particulier les unités porte-outil 13 et porte-pièce 11 bénéficient d'un excellent comportement dynamique, l'inertie des éléments en mouvement étant contenue et la rigidité de la machine-outil 10 étant accrue.

Grâce à la conception de la machine-outil 10 selon l'invention, les coulisses 120 peuvent être dimensionnées de manière relativement compacte.

Ces caractéristiques permettent également de pouvoir intégrer facilement à la machine-outil 10 des parois de protection (non représentées sur les figures) contre les projections de copeaux de matière et de lubrifiants d'usinage. Ces parois de protections sont agencées de sorte à former une chambre d'usinage sensiblement étanche au milieu extérieur. Par ailleurs, la chambre d'usinage peut être conçue de façon très compacte en fixant de façon étanche les parois, d'une part, au bâti 12, et d'autre part, à chaque chariot par exemple par le biais de racleurs 121 ou de soufflets 122.

En particulier, les soufflets 122 sont schématiquement représentés sur la figure 1 en transparence afin de faire apparaitre notamment les coulisses 120. Les figures 3 et 4 montrent un exemple d'un soufflet 122 comprenant deux parois opposées déformables, dont une est étendue et dont l'autre est rétractée selon la position occupée par les chariots. La figure 4 montre également un racleur 121 ajusté autour du porte-outil 135, en particulier au niveau d'une portion cylindrique de ce dernier s'étendant selon la direction Y.

Il y a lieu de noter que lorsque la machine-outil 10 est destinée à réaliser des opérations de fraisage, le porte-outil 135 est configurée pour entraîner en rotation l'outil de coupe 130, c'est-à-dire la fraise, autour de son axe longitudinal. Cette disposition peut être mise en oeuvre par des solutions du commerce, à la portée de l'homme du métier. A titre d'exemple, lors de la réalisation d'opérations de fraisage, le porte-outil 135 peut être configurée pour entraîner l'outil de coupe 130 en rotation autour de son axe longitudinal à plus de 60000 tours/minute, par exemple à 70000 tours/minute.

La machine-outil 10 peut comporter une unité additionnelle 14 reliée cinématiquement au bâti 12 de sorte à uniquement présenter un degré de liberté en translation et un degré de liberté en rotation selon la direction Z. De façon analogue à l'unité porte-pièce 11 et comme illustré sur les figures 1 et 2, cette unité additionnelle 14 comporte un chariot additionnel 140 monté sur au moins une coulisse 120 fixée directement sur le bâti 12. L'unité additionnelle 14 est disposée de sorte à être agencée, avec l'unité porte-pièce 11, de part et d'autre de l'unité porte-outil 13. Autrement dit, l'outil de coupe 130 est interposé entre l'unité porte-pièce 11 et l'unité additionnelle 14.

Avantageusement, les coulisses 120 auxquelles sont reliés le chariot porte-pièce 110 et le chariot additionnel 140 peuvent être constituées par les mêmes coulisses. Cette caractéristique permet avantageusement de garantir l'alignement entre le chariot porte-pièce 110 et le chariot additionnel 140.

Le chariot additionnel 140 est adapté à recevoir un module contre porte-pièce 141 ou un porte-outil secondaire (non représenté sur les figures) agencé en vis-à-vis de l'unité porte-pièce 11. Le chariot additionnel 140 est destiné à maintenir la pièce 100 en position, lorsqu'il comporte le module contre porte-pièce 141, et à, usiner par fraisage ou perçage la pièce 100 maintenue par le module porte-pièce 112, lorsqu'il comporte le porte-outil secondaire.

En particulier, le module contre porte-pièce 141 peut être formé par exemple, de la même manière que décrit ci-dessus, par une pince ou par un mandrin comme le montre la figure 1, ou par un dispositif de posage, comme le montre la figure 2.

Da façon analogue au chariot porte-pièce 110, le chariot additionnel 140 présente une ouverture traversante 142 s'étendant selon la direction Z et débouche à l'une de ses extrémités au niveau du module contre porte-pièce 141. La pièce 100 est destinée à être guidée à travers l'ouverture traversante 142 afin de s'extraire de la zone d'usinage de la machine-outil 10.

Avantageusement, dans l'exemple représenté sur la figure 1, le module contre porte-pièce 141 peut être piloté de sorte à saisir la pièce 100 maintenue par le chariot porte-pièce 110, notamment par le module porte-pièce 112, afin que cette dernière, après avoir été libérée par ledit module porte-pièce 112, soit immobilisée en position seulement par ledit module contre porte-pièce 141 pour permettre la réalisation d'une nouvelle phase d'usinage. Lors de cette nouvelle phase d'usinage l'outil de coupe 130 peut alors avoir accès à des zones de la pièce 100 qui étaient inaccessibles lorsqu'elle était maintenue en position par le module porte-pièce 112 et peut ainsi finaliser l'usinage de la pièce 100.

Par ailleurs, dans l'exemple représenté sur la figure 2, la pièce 100, en l'espèce la bande, peut avantageusement être maintenue simultanément par le module porte-pièce 112 et le module contre porte-pièce 141. Un tel dispositif de posage est également destiné, par exemple en combinaison avec le dispositif de posage du porte-pièce, à guider la pièce 100 lorsqu'elle est entraînée en déplacement. Les dispositifs de posage comportent à cet effet, un chemin de guidage avec lequel coopère la pièce 100 et des moyens de serrage adaptés à immobiliser ou à libérer la pièce 100.

Dans cet exemple de réalisation de l'invention, le module porte-pièce 112 et le module contre porte-pièce 141 peuvent être pilotés pour déplacer la pièce 100 dans un mouvement d'avance, c'est-à-dire qu'elle est entraînée en translation uniquement dans un sens selon la direction Z. Ce mouvement d'avance de la pièce 100 est, par exemple, réalisé avant une phase d'usinage et à l'issue de cette dernière pour générer un flux de pièce 100 entrant, sous forme d'une pièce brute, et sortant, sous forme de pièce 100 usinée, de la machine-outil 10. Plus précisément, afin de déplacer la pièce 100 dans ce mouvement d'avance, par exemple le module porte-pièce 112 ou le module contre porte-pièce 141 est piloté de sorte à maintenir la pièce 100 alors que l'autre module est piloté pour la libérer, puis le module qui maintient la pièce est déplacé en translation selon la direction Z dans un sens donné. Ce dernier est ensuite piloté de sorte à libérer la pièce 100 alors que l'autre module est piloté pour maintenir la pièce.

Le module porte-pièce 112 et le module contre porte-pièce 141 peuvent également être pilotés pour déplacer la pièce 100, lors d'une phase d'usinage. Plus particulièrement, le module porte-pièce 112 et le module contre porte-pièce 141 sont dans ce cas entraînés l'un et l'autre dans des mouvements identiques de translation, et éventuellement de rotation pour incliner la pièce 100 selon la direction Z, notamment lorsque la pièce 100 est sous la forme d'une barre.

Lorsque le chariot additionnel 140 reçoit un porte-outil secondaire, ce dernier est adapté à porter un outil de coupe, tel qu'un outil de fraisage ou un outil de tournage de sorte que l'unité additionnelle 14 permette de réaliser des opérations de tournage et de fraisage d'une pièce immobilisée par le module porte-outil 112.

Comme le montrent les figures 1 et 2 dans l'exemple préféré de réalisation de l'invention, le chariot porte-pièce 110, le premier chariot 131, le second chariot 133 et le chariot additionnel 140 sont supportés par deux coulisses 120.

Avantageusement, il peut être envisagé que la machine-outil comporte une seconde unité porte-outil analogue à l'unité porte-outil 13, agencée de façon symétrique à cette dernière par rapport à un plan de symétrie YZ, de sorte que lesdites unités porte-outil se trouvent respectivement de part et d'autre de l'unité porte-pièce 11 et de l'unité additionnelle 14. Cette caractéristique est avantageuse en ce qu'elle permet de pouvoir réaliser des opérations d'usinage simultanément sur des pièces maintenues en position par l'unité porte-pièce 11 et par l'unité additionnelle 14. La seconde unité porte-outil est analogue à l'unité porte-outil 13 dans le sens où elle présente également une unité porte-outil destinée à porter un outil de coupe et reliée cinématiquement au bâti 12 avec des degrés de liberté identiques à l'unité porte-outil 13.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, les exemples de réalisation représentés sur les figures 1 et 2, et décrits ci-dessus concernent une machine-outil 10 dont l'approvisionnement est réalisé par guidage d'une pièce 100 dans une zone d'usinage. Toutefois, la machine-outil 10 selon l'invention peut être adaptée à usiner de la pièce 100 sous la forme de lots, par exemple de lopins, dont l'approvisionnement est réalisé de façon séquentielle, chaque pièce 100 usinée provenant d'une pièce 100 brute différente.

Par ailleurs, le porte-outil secondaire peut porter une contre-pointe fixe ou tournante.

Il y a lieu de noter que les déplacements en translation et en rotation des unités porte-pièce 11 et porte-outil 13, et de l'éventuelle unité additionnelle 14, sont assurés, de manière connue de l'homme du métier, par des moteurs électriques indépendants asservis par l'unité de contrôle et de commande.

## Revendications

1. Machine-outil (10) à commande numérique pour l'usinage de pièces micromécaniques à partir d'une pièce (100) brute sous forme d'une barre ou d'une bande, comprenant un bâti (12), une unité porte-pièce (11) destinée à maintenir la pièce (100) en position et une unité porte-outil (13) destinée à porter un outil de coupe (130), la machine-outil (10) étant **caractérisée en ce que** :
- l'unité porte-pièce (11) est reliée cinématiquement au bâti (12) de sorte à uniquement présenter, par rapport au bâti (12), un degré de liberté en rotation et un degré de liberté en translation selon une direction Z, dans un repère XYZ,
- l'unité porte-outil (13) est reliée cinématiquement au bâti (12) de sorte à uniquement présenter, par rapport au bâti (12), un degré de liberté en translation selon une direction X, et un degré de liberté en rotation et en translation selon une direction Y.

2. Machine-outil (10) selon la revendication 1, dans laquelle l'unité porte-pièce (11) comporte un chariot porte-pièce (110) relié au bâti (12) par le biais d'au moins une coulisse (120), ledit chariot porte-pièce (110) comportant un module porte-pièce (112) adapté à être piloté pour occuper un état de serrage dans lequel il maintien en position la pièce (100), ou pour occuper un état de libération dans lequel il autorise le déplacement de la pièce (100).

3. Machine-outil (10) selon la revendication 2, dans laquelle le chariot porte-pièce (110) présente une ouverture traversante s'étendant selon la direction Z et débouchant à l'une de ses extrémités au niveau du module porte-pièce (112), ladite ouverture étant destinée à recevoir la pièce (100) afin d'alimenter une zone d'usinage de la machine-outil (10).

4. Machine-outil (10) selon l'une des revendications 1 à 3, dans laquelle l'unité porte-outil (13) comporte un premier chariot (131) relié au bâti (12) par le biais d'au moins une coulisse (120) s'étendant selon la direction X, et un second chariot (133) relié au premier chariot (131) et comportant un porte-outil (135) mobile en rotation et en translation selon la direction Y.

5. Machine-outil (10) selon la revendication 4, dans laquelle le second chariot (133) est montée sur au moins une coulisse (120) fixée sur le premier chariot (131) et s'étendant selon la direction Y.

6. Machine-outil (10) selon l'une des revendications 1 à 5, comportant une unité additionnelle (14) reliée cinématiquement au bâti (12) de sorte à uniquement présenter un degré de liberté en rotation et un degré de liberté en translation selon la direction Z, l'unité additionnelle (14) étant agencée de façon que l'outil de coupe (130) soit interposé entre l'unité porte-pièce (11) et ladite unité additionnelle (14), et comportant un chariot additionnel (140) agencé en vis-à-vis de l'unité porte-pièce (11) et recevant un module contre porte-pièce (141) destiné à immobiliser ou libérer une pièce (100) ou recevant un porte-outil secondaire destiné à porter un outil de coupe (130).

7. Machine-outil (10) selon la revendication 6, dans laquelle le chariot additionnel (140) présente une ouverture traversante (142) s'étendant selon la direction Z et débouchant à l'une de ses extrémités au niveau du module contre porte-pièce (141), l'ouverture traversante (142) étant destinée à recevoir la pièce (100) afin de l'extraire d'une zone d'usinage de la machine-outil (10).

8. Machine-outil (10) selon la revendication 2 et l'une des revendications 6 ou 7, dans laquelle le chariot additionnel (140) est monté sur au moins une coulisse (120) fixée sur le bâti (12), les coulisses (120) auxquelles sont reliés le chariot porte-pièce (110) et le chariot additionnel (140) étant constituées par les mêmes coulisses.

9. Machine-outil (10) selon la revendication 2 et l'une des revendications 6 à 8, dans laquelle le module porte-pièce (112) et le module contre porte-pièce (141) peuvent comporter l'un et l'autre un dispositif de posage, destinés à guider la pièce (100) lorsqu'elle est entraînée en déplacement, ou à maintenir la pièce (100) en position.

10. Machine-outil (10) selon l'une des revendications 6 à 9, comprenant une seconde unité porte-outil analogue à l'unité porte-outil (13), agencée de façon symétrique à cette dernière par rapport à un plan de symétrie YZ, de sorte que lesdites unités porte-outil se trouvent respectivement de part et d'autre de l'unité porte-pièce (11) et de l'unité additionnelle (14).
